## Europäisches Patentamt
## European Patent Office
## Office européen des brevets

(19)

(11) Numéro de publication : **0 320 326 B1**

# FASCICULE DE BREVET EUROPEEN

(12)

(45) Date de publication du fascicule du brevet :
**15.01.92 Bulletin 92/03**

(51) Int. Cl.⁵ : **G01B 11/24**

(21) Numéro de dépôt : **88402928.1**

(22) Date de dépôt : **23.11.88**

(54) **Procédé et dispositif de contrôle de contours géométriques sans contact.**

(30) Priorité : **09.12.87 FR 8717123**

(43) Date de publication de la demande :
**14.06.89 Bulletin 89/24**

(45) Mention de la délivrance du brevet :
**15.01.92 Bulletin 92/03**

(84) Etats contractants désignés :
**AT CH DE FR GB IT LI NL SE**

(56) Documents cités :
**GB-A- 1 078 108
GB-A- 1 150 080
US-A- 4 299 491
US-A- 4 473 750
PATENT ABSTRACTS OF JAPAN Vo.11, no.15
(P-536)(2462),16 janvier 1987;& JP-A-61 189
405**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Meiffren, Jean Luc
6, Allée Cl Marot Fontaine de l'Orme
F-91240 Saint Michel sur Orge (FR)**
Inventeur : **Palliotet, Pierre Marie
13, Allée Paillard
F-91390 Morsang sur Orge (FR)**
Inventeur : **Vaerman, Jean Fernand
2, Allée des Perce-neige
F-77240 Vert Saint Denis (FR)**

(74) Mandataire : **Moinat, François et al
S.N.E.C.M.A. Service des Brevets Boîte
Postale 81
F-91003 Evry Cédex (FR)**

## Description

La présente invention concerne un procédé et son dispositif de mise en oeuvre, de mesure ou de contrôle des contours géométriques d'une pièce, sans contact entre le dispositif et la pièce à contrôler.

La plupart des dispositifs connus de mesure ou de contrôle des contours géométriques d'une pièce s'effectuent par contact d'un palpeur sur la pièce et mesure du déplacement de ce palpeur en fonction du déplacement de la pièce perpendiculairement à la direction du palpage.

Il est des cas où ce type de contrôle est peu adapté par exemple lorsque les contours à contrôler sont ceux d'une pièce gauche, ou lorsque les cadences de contrôle doivent être soutenues, ou encore lorsque les pièces à contrôler sont d'une grande fragilité.

Cette dernière hypothèse se rencontre par exemple pour le contrôle de noyaux céramiques destinés à servir de noyaux de moulage d'aubes creuses utilisées dans les techniques aéronautiques.

Dans les parties chaudes des turboréacteurs (aubes de turbine haute pression par exemple), on utilise des aubes refroidies par un fluide de refroidissement circulant au travers de cavités de l'aube. Pour réaliser ces aubes en fonderie, on fabrique des noyaux céramiques à la forme des cavités internes de l'aube.

La définition géométrique de ces noyaux doit être extrêmement répétitive avec une très faible dispersion, car de la forme des noyaux dépendra l'épaisseur des parois des aubes moulées et donc leur capacité à être convenablement et régulièrement refroidies. Un contrôle à l'unité est donc indispensable.

Or, ces noyaux sont d'une extrême fragilité, puisqu'on a constaté statistiquement qu'une pression de 13 grammes exercée par un palpeur suffisait à les briser ou à les déformer.

La présente invention a donc pour but de prévoir une méthode et un dispositif pour le contrôle sans contact des contours géométriques de pièces telles que, par exemples des noyaux céramiques de fonderie, ou des aubes de turboréacteurs ou encore toute autre pièce nécessitant un contrôle sans contact. Le document US-A-4473750 divulgue un tel dispositif, dans lequel la pièce à contrôler est apte à réfléchir un rayonnement lumineux.

L'invention a également pour but de réaliser un dispositif de contrôle sans contact entièrement automatisé permettant de grandes cadences de contrôle pour un contrôle unitaire de pièces de très grandes séries.

L'invention a aussi pour but de permettre un contrôle de pièces sections par sections avec un pas de mesure constant ou variable, pour tenir compte des courbures des pièces.

Ainsi un pas de 4 ou 5 mm pourra être choisi pour le contrôle de surface à grand rayon de courbure tandis qu'un pas plus faible de 1 mm voir 2 microns (effet de "loupe") pourra être utilisé pour des surfaces à forte courbure ou comportant des anomalies de surface, avec éventuellement un retour en arrière du positionnement de la pièce lorsque le système constate qu'une anomalie de surface nécessite le passage d'un pas élevé à un pas fin.

L'invention a également pour intérêt, et cela dérive de la remarque précédente, de permettre le contrôle de pièces gauches telles que des aubes ou des noyaux céramiques en effectuant la mesure tant de l'intrados et de l'extrados, que du bord d'attaque et du bord de fuite et en reconstituant la géométrie de la pièce sur table traçante par rotation des courbes successives l'une par rapport à l'autre et recouvrement desdites courbes.

L'invention a donc pour objet un procédé de mesure ou de contrôle sans contact des contours géométriques de la section d'une pièce apte à réfléchir au moins partiellement un rayonnement lumineux caractérisé en ce que

a) on dispose la pièce sur un banc de mesure possédant trois degrés de libertés en translation X, Y, Z et un degré de liberté $\theta$ en rotation autour de l'axe vertical Y ;

b) on éclaire la pièce ponctuellement au moyen d'au moins une source lumineuse émettant un rayonnement focalisé horizontal parallèle à l'axe Z ;

c) on recueille le rayonnement réfléchi par la pièce au moyen d'au moins un dispositif de détection photoélectrique disposé dans le plan vertical ZY perpendiculairement au rayon réfléchi, ledit dispositif de détection étant constitué par une barette dite barette de mesure constituée de photodiodes distantes entre elles d'un pas constant ;

d) on enregistre au moyen d'un calculateur l'index $i_{dm}$ de la photodiode ayant reçu l'intensité maximale du rayonnement réfléchi par la pièce, ainsi que l'index $i_x$ positionnement de la pièce selon l'axe X ;

e) on déplace la pièce d'un pas de mesure selon l'axe X et on répète les opérations c) et d) ;

f) on effectue les étapes c), d) et e) autant de fois que la dimension de la pièce selon l'axe X comporte de fois le pas de mesure.

Ensuite, pour mesurer le profil complet d'une pièce on réalise

g) une rotation $\theta$ de 90° de la pièce et on répète les opérations c) à f) jusqu'à avoir effectué la rotation complète de la pièce et l'enregistrement desdites mesures selon quatre faces de la pièce.

L'invention à également pour objet le dispositif de mise en oeuvre du procédé dont les grandes lignes viennent d'être énoncées, dispositif comportant notamment

— au moins une source lumineuse focalisée apte à éclairer la pièce horizontalement

— un banc support de pièce constitué d'au moins une poutre verticale sur laquelle est apte à coulisser verticalement une console supportant une première table apte à coulisser horizontalement selon l'axe X, ladite première table portant une seconde table coulissant horizontalement en Z, la seconde table portant un plateau porte-pièce circulaire, monté rotatif autour de l'axe Y

— au moins un dispositif de détection comportant une barette de photodétecteurs disposée dans un plan vertical, orthogonalement au rayon réfléchi par la pièce, et comportant une électronique de commande

— un calculateur relié au banc support de pièce pour en commander les déplacements en X, Y, Z et enregistrer les informations de position dudit banc support, et relié au dispositif de détection, pour en enregistrer les index $i_{dm}$ de chacune des photodiodes dudit dispositif.

D'autres caractéristiques, tant du procédé que de son dispositif de mise en oeuvre vont être explicitées dans la suite de la description et en regard des figures annexées, parmi lesquelles :

— la figure 1 est un schéma du principe de triangulation optique à la base duquel est réalisée l'invention ;

— la figure 2 montre la distribution gaussienne d'éclairement d'une pièce par un faisceau cylindrique ;

— la figure 3 est une vue de face du dispositif de mesure ;

— la figure 3a est une vue en coupe selon AA de la figure 3, montrant la barette de mesure et son support ;

— la figure 3b est une vue selon F du dispositif de détection et de son objectif d'amplification angulaire.

— la figure 4 est une vue selon F1 de la figure 4 à une échelle différente ;

— la figure 5 représente, très schématisé, le dispositif de la figure 3 avec ses liaisons électriques au calculateur de commande et de visualisation des profils.

— la figure 6 est un exemple de visualisation sur table traçante au moyen du procédé selon l'invention de deux sections d'un noyau céramique, représenté vu de profil à la figure 6a.

— la figure 7 est une première variante du dispositif permettant de mesurer simultanément deux faces opposées d'une même pièce ;

— la figure 8 est une seconde variante répondant au même but que le dispositif de la figure 7.

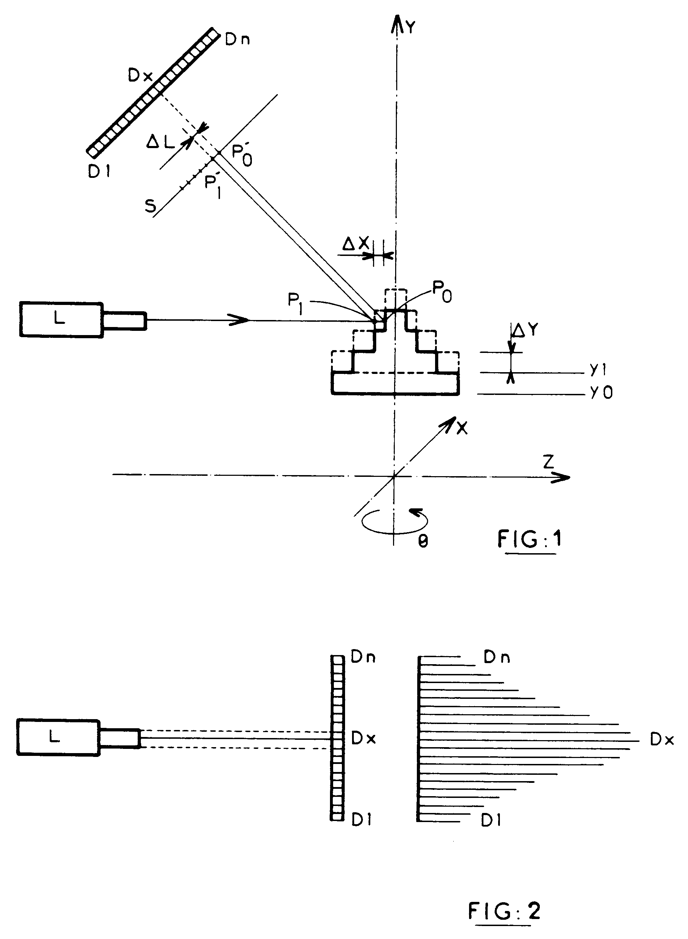

Le procédé selon l'invention part des constatations, d'une part que les surfaces de certains matériaux, notamment les métalliques ou les céramiques réfléchissent les rayons lumineux qu'elles reçoivent et que d'autre part, l'éclairement créé par un faisceau lumineux cylindrique, tel que celui émis par un laser, a en section une forme gaussienne. Ainsi si l'on éclaire une barette de diodes par un rayon laser L, on constatera une distribution d'intensité du signal de sortie décroissante autour de la diode centrale centrée sur l'axe du rayon selon une courbe de Gauss (voir figure 2).

Ainsi si on éclaire ponctuellement (figure 1) une cale cylindrique étagée par un rayon laser focalisé, le rayon qui frappe orthogonalement la surface en Po est réfléchi et peut être mesuré à 45° dans le plan vertical et sur une surface S en un point P'o caractéristique de la position dans l'espace de Po. Si on déplace verticalement la cale de Δy et que le rayon vienne frapper le point P1 de l'étage inférieur, le rayon réfléchi frappera la surface S en un point P'1 qui sera caractéristique de la position de P1.

Si la surface S est remplacée par une barette de diodes D1 à Dn, toutes espacées d'un même pas, la connaissance de l'index $i_x$ de la diode Dx ayant reçu le plus de lumière réfléchie par la pièce, ainsi que la connaissance des références de positionnement de la pièce en X, Y, Z, θ permettront de déterminer avec précision le positionnement dans l'espace du point objet Po. La répétition de ces opérations pas après pas (en θ dans l'ensemble de la figure 1) permettra de reconstituer la courbe des points voisins Pi.

Ainsi, de proche en proche sur une même section (à Y constant), on pourra reconstituer le contour géométrique de la section. Si la pièce n'est pas circulaire comme dans l'exemple de la figure 1, mais comporte des faces parallèles ou pseudo-parallèles comme par exemple une aube de turbine, on effectuera les mesures face par face. Ainsi après avoir positionné la pièce, intrados face à la source lumineuse, et exploré tout l'intrados par pas en X on effectuera une rotation θ de 90° de la pièce pour explorer le bord d'attaque puis une nouvelle rotation de 90° pour explorer l'extrados, puis encore une fois pour explorer le bord de fuite.

On recommencera la même opération pour chaque section de la pièce après déplacement de celle-ci selon l'axe vertical Y avec un pas égal à la précision de mesure désirée jusqu'à avoir une représentation complète de la pièce.

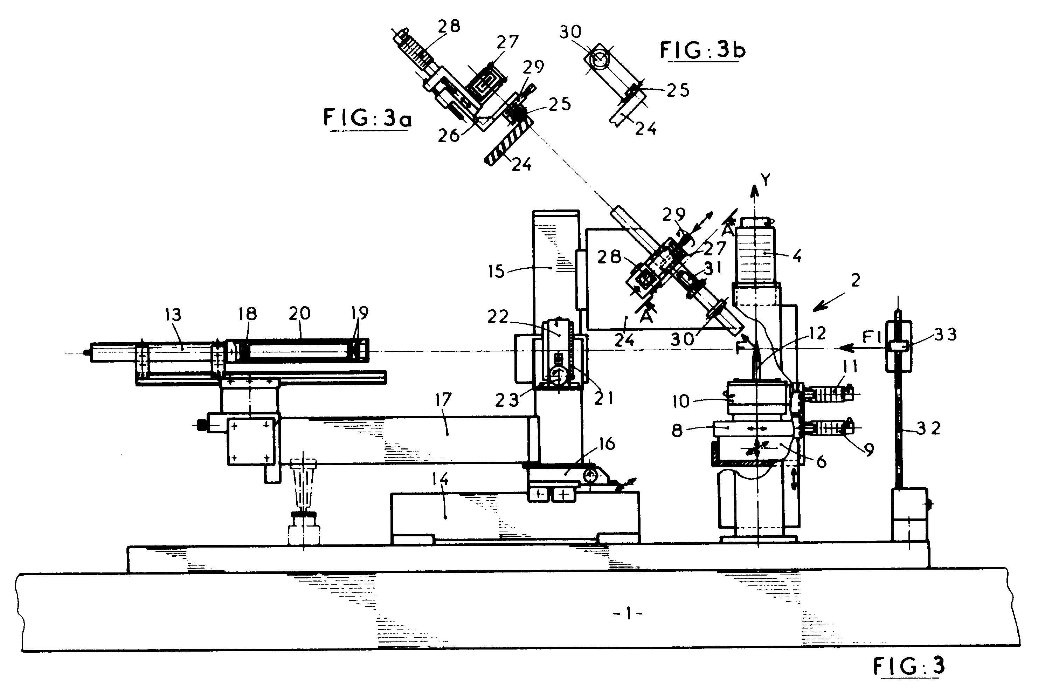

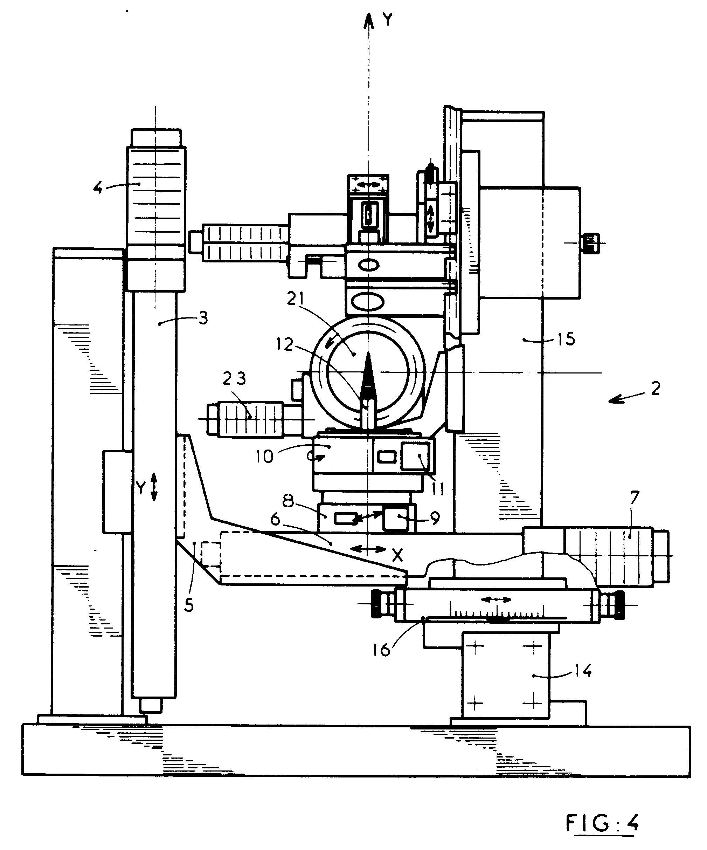

Pour mettre en oeuvre ce principe de base on réalise selon un mode de réalisation préférentiel le dispositif représenté aux figures 3 à 5.

Sur un marbre 1 est disposé un banc 2 support de pièce comportant une poutre verticale 3 sur laquelle peut coulisser selon l'axe vertical Y, sous l'action d'un moteur 4, une console 5 supportant une première table 6 pouvant elle-même se déplacer sur la console selon l'axe X au moyen d'un moteur 7. La table 6 supporte une seconde table horizontale 8 pouvant se déplacer selon l'axe horizontal Z par pas de 1 microns au moyen d'un moteur 9.

Sur la table 8 est fixé un plateau porte pièce 10 circulaire lui-même monté rotatif autour de l'axe vertical y par pas de 1/10 de degré sous l'action d'un moteur 11.

La pièce 12 (ici un gradin étagé d'étalonnage) disposée sur le plateau 10 a donc 4 degrés de mouvements possibles en X, Y, Z, θ.

La source lumineuse est ici constituée par un laser hélium-néon 13 de la longueur d'onde 630 nm disposé sur un bâti comportant une première poutre horizontale 14 sur laquelle est montée une poutre verticale 15 réglable en position selon l'axe X au moyen d'une console de réglage 16. La poutre 15 supporte une seconde poutre horizontale 17 à l'extrémité de laquelle est posé le laser 13.

Celui-ci comporte un jeu de lentilles 18-19 disposées dans un manchon 20 afin de focaliser le rayon émis sur un diamètre de 60 microns sur la pièce, distante ici de 800 mm des lentilles 19.

Le laser 13 étant du type hélium-néon polarisé verticalement, un filtre polaroïd 21, ou tout autre atténuateur acousto-optique tel qu'une cellule de Bragg, est monté sur un support tournant 22 commandé par un moteur 23 et accroché à la poutre verticale 15. Ce film polaroïd est destiné à jouer un rôle d'atténuateur afin de pouvoir réguler l'intensité du faisceau incident issu du laser hélium-néon.

La poutre verticale 15 supporte une équerre 24 à 45°, disposée dans le plan vertical YZ dont le côté incliné comporte un rail 25 sur lequel coulisse une équerre 26 portant la barette 27 de photodiodes constituant le dispositif de détection.

La position de ce dernier est réglable parallèlement à l'axe X au moyen d'un moteur 28 et perpendiculairement à l'axe optique du rayon réfléchi dans le plan vertical au moyen d'une molette de réglage 29.

Le rail 25 supporte également entre la pièce et la barette de mesure une lentille pivot 30 et un objectif de microscope 31 à grossissement au moins égal à X 25 servant d'amplificateur angulaire au rayon réfléchi afin de donner à la barette de mesure, équipée dans l'exemple de 1728 photodiodes espacées de 10 microns la finesse de mesure désirée pour le système.

Une barette de 1728 diodes permet de détecter des fluctuations de profil de 9 mm selon l'axe Z, un déplacement d'une diode correspondant à une évolution de profil de 5 microns. Si une finesse plus grande est souhaitée, il suffira de disposer d'un amplificateur angulaire plus grand.

Le bâti comporte en outre un bras vertical 32 supportant une seconde barette 33 de 256 photodiodes, disposée perpendiculairement à l'axe optique du rayon incident et en arrière de la pièce 12. Cette seconde barette, dite barette d'apprentissage est destinée à déterminer par ombrage préalablement à la mesure, les index $ix_l$ et $ix_n$ de positionnement en X de la table 6 correspondant à la largeur de la face mesurée.

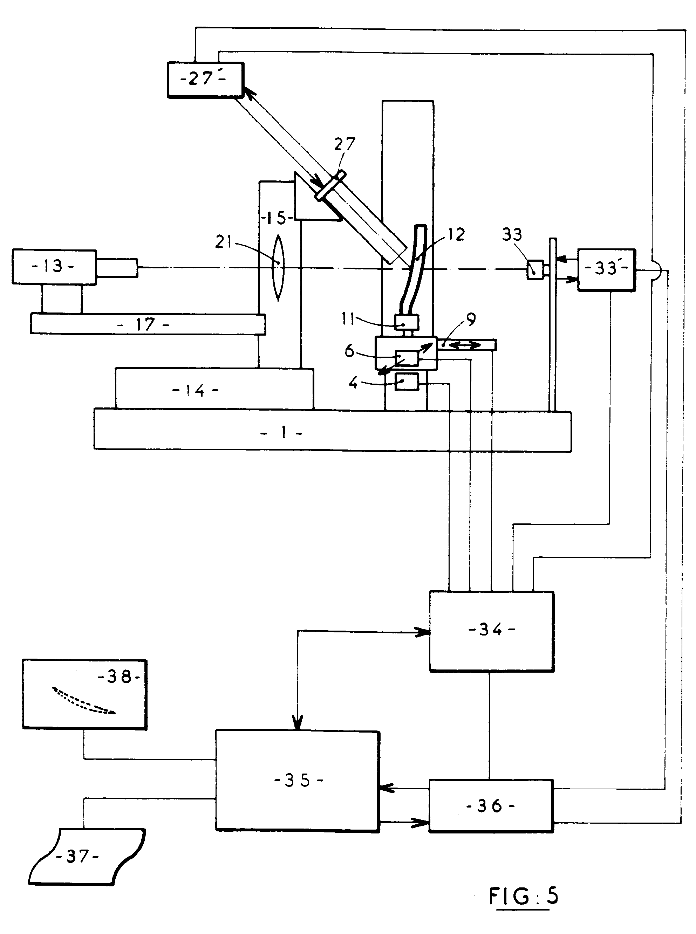

Si l'on se réfère à la figure 5, on voit que chacune des barettes, de mesure 27 ou d'apprentissage 33 sont reliées à une électronique de commande (respectivement 27' et 33'), synchronisée par une horloge 34 appartenant à un calculateur 35. L'horloge 34 synchronise également les commandes pas à pas des moteurs 4, 6, 9, 11 de déplacement de la pièce respectivement en Y, en X, en Z et en 0.

Le calculateur 35 est relié à un convertisseur analogique-digital 36 qui reçoit les signaux de sortie de la barette de mesure, c'est à dire les 1728 niveaux Ai d'amplitudes d'éclairement des diodes de même que les 1728 index $i_{dmi}$ de positionnement des diodes. Le convertisseur 36 reçoit également les paramètres similaires provenant de la barette d'apprentissage 33.

La calculateur 35 est relié à une imprimante 37 et à une table traçante 38 sur laquelle seront reconstitués les profils de section des pièces à mesurer.

Le dispositif ainsi décrit est mis en oeuvre de la façon suivante :

Tout d'abord, on cale le positionnement du laser 13 et de la barette de mesure 27 en disposant sur le plateau porte-pièce une bille étalon de diamètre 1 mm afin de centrer le faisceau réfléchi par la bille sur la diode centrale de la barette, en vérifiant au travers du calculateur l'index $i_{dm}$ de la diode qui reçoit l'amplitude maximale et en déplaçant la barette 27 au moyen de la molette 29.

On dispose ensuite une pièce à mesurer sur le plateau porte-pièce et on vient repérer par ombrage les index $i_{xl}$ et $i_{xn}$ de déplacement en X de la table 6 correspondant aux deux bords de la pièce. Pour cela, on utilise la barette d'apprentissage 33, on déplace la table 6 dans un sens en X jusqu'à ce que le faisceau incident, qui était jusque là réfléchi soit transmis à la barette d'apprentissage. Le calculateur enregistre alors l'index $i_{xl}$ de la table 6, ainsi que l'index $i_{dal}$ de la première diode de la barette d'apprentissage qui a reçu l'amplitude maximale du rayon ; On déplace ensuite X dans l'autre sens de la pièce ; le rayon incident est à nouveau occulté par la jusqu'au moment où l'autre bord de la pièce arrive face à lui, ce qui correspond à un index $i_{xn}$, de positionnement en X de la pièce et à un index $i_{dan}$ de la barette d'apprentissage.

A partir de ces données $i_{xl}$, $i_{xn}$ ; $i_{dal}$, $i_{dan}$ enregistrées par le calculateur, celui-ci par un programme approprié est à même de déterminer, lors de la mesure effectuée ensuite par la barette de mesure les cotes de la pièce correspondant aux index $i_{xl}$, $i_{xn}$ entre lesquelles les mesures effectuées par la barette 27 correspondent à des points réels du contour géométrique de la pièce.

On passe ensuite à la mesure proprement dite. A partir du positionnement de la pièce correspondant à l'index $i_{xl}$ et jusqu'à celui correspondant à l'index $i_{xn}$, on déplace la table 6, pas par pas, et on recueille à chaque pas sur la barette de mesure 27 le couple d'informations : amplitude maximum d'éclairement $I$

index $i_{dmj}$ de la diode qui a reçu ce pas d'amplitude, ces données étant mémorisées dans le calculateur. A partir du triplet d'informations [$i_{xi}$, $i_{dmj}$, amplitude max.] le système est apte à faire correspondre le point objet de la pièce. Ainsi point par point, on reconstitue la courbe géométrique de la face mesurée de la pièce.

Le système est programmé de telle sorte que pour des courbures faibles, l'avance en X s'effectue avec un pas assez grand par exemple 1 mm et que s'il détecte une variation importante de courbure, l'avance puisse être modifiée par exemple par pas de 1/100e de mm afin d'avoir une précision de mesure plus importante sur les parties très courbées.

Lorsque on a mesuré la totalité de la première face, i.e lorsque le calculateur constate que l'index $i_{xn}$ est atteint, il commande la mise en route du moteur 11 faisant ainsi tourner la pièce de 90°. Les opérations d'apprentissage puis de mesure sont répétées pour la face alors en position de mesure, puis les deux dernières faces sont mesurées de façon similaire après nouvelle rotation de 90° du plateau tournant.

Si l'on veut mesurer le volume géométrique d'une pièce, on divisera ladite pièce en sections parallèles au plan XZ et l'on effectuera les opérations précédentes autant de fois que la pièce compte de sections, par déplacements successifs, d'un pas de mesure en Y, puis on tracera au moyen de la sortie graphique du calculateur le contour ou les contours superposés de chaque section pour reconstituer une vue dans l'espace en 3 dimensions de la géométrie de la pièce.

Le calculateur ayant enregistré toutes les données nécessaires pour reproduire point par point chacune des faces, il lui suffit d'ordonner par déphasage de 90° les quatre courbes obtenues afin de restituer un contour complet sur la table traçante 38.

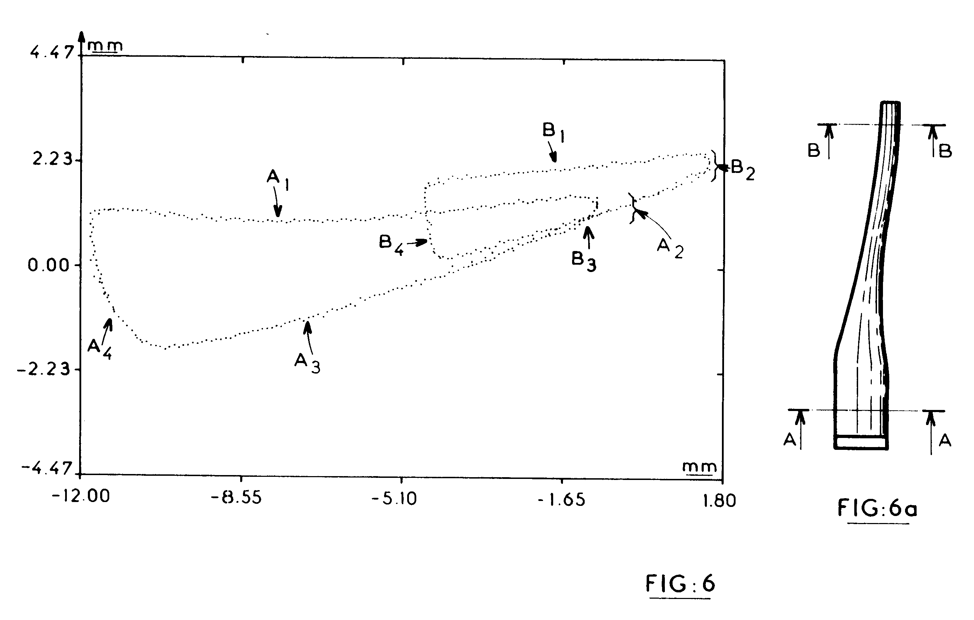

Un exemple de reconstitution de telles courbes est donné à la figure 6 pour le noyau de fonderie dont la forme générale est reproduite à la figure 6a. Sur la figure 6 ont été superposées deux sections mesurées aux niveaux A et B du noyau de la figure 6a.

Chaque section a été mesurée ainsi que cela a été dit plus haut par mesures successives de chacune des faces A1, A2, A3, A4 puis B1, B2, B3, B4.

Si on se réfère à la section 1, chacune des faces reconstituées a été repositionnée par le calculateur. On constate à l'intersection de chaque paire de faces des points de recouvrement des courbes dont la précision de recouvrement donne une bonne idée du degré de restitution du contour géométrique de chaque section, le pas de mesure ayant été ici de 1/10 de mm.

On peut constater également que le dispositif recrée avec précision la position spatiale de chaque section, ce qui se vérifie en comparant la superposition des sections A et B et leur position réelle sur la figure 6a.

On voit ainsi que la pièce mesurée 12 peut être positionnée en tout endroit du plateau porteur, ce qui évite tout système de calage ou de centrage.

En utilisant le même principe de mesure certaines variantes peuvent être apportées au dispositif précédemment décrit.

Ainsi on peut souhaiter contrôler simultanément deux faces opposées d'un même objet. Ceci peut être fait de deux manière différentes :

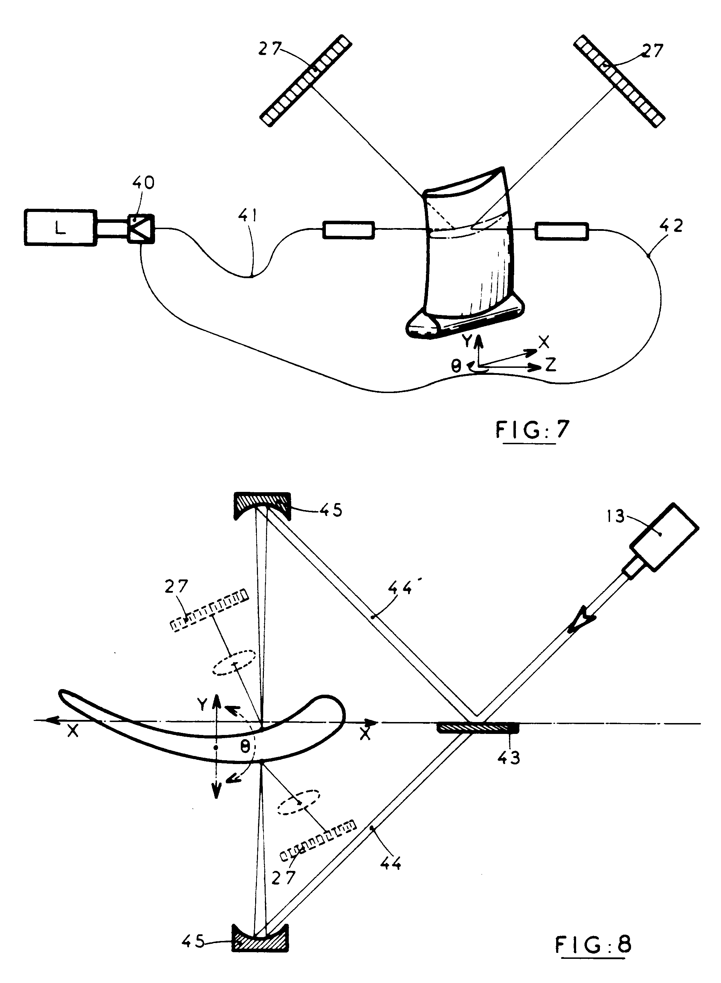

Si l'on se réfère à la figure 7, la source lumineuse L, qui peut être soit un laser hélium-néon comme dans le cas précédent, soit une diode laser, est équipée d'un bloc séparateur 40 suivi de deux fibres optiques 41, 42 amenant deux rayons incidents face à face de part et d'autre de la pièce. Le dispositif de détection comporte alors deux barettes de diodes de mesure 27 de part et d'autre de la pièce et le logiciel du calculateur est adapté à l'enregistrement simultané des mesures correspondant à chaque face.

Si l'on se réfère maintenant à la figure 8, qui montre une seconde variante, un même faisceau issu du laser 13 est séparé par un miroir semi réfléchissant 43 en deux faisceaux symétriques 44, 44' qui sont renvoyés sur chaque face de la pièce par deux miroirs concaves 45 de façon à être focalisés sur chaque surface objet. De même que dans le cas précédent, deux barettes de mesure 27 sont utilisées pour la détection.

Le procédé tel qu'il a été décrit ci-dessus n'est pas limité aux seules applications de contrôle visuel de contours sur une représentation graphique.

Ainsi par une simple adaptation du logiciel du calculateur, on peut corrêler le positionnement des deux bords d'une pièce à la même cote en X, $i_x$, de façon à contrôler l'épaisseur de la pièce à cette cote $i_x$. Ceci peut être fait en logeant virtuellement par calcul un cercle inscrit entre les deux faces opposées de la pièce, le calculateur se contentant alors sur imprimante de donner une indication d'acceptation ou de rejet de la pièce.

La même technique des cercles inscrits peut être utilisée pour vérifier le rayon de courbure d'un bord d'attaque ou d'un bord de fuite d'une aube par exemple, permettant ainsi de vérifier que l'angle d'arête n'est pas plus aigu que celui prévu dans la définition de la pièce.

En outre, les exemples donnés ci-dessus ont prévu de vérifier un contour soit par quatre rotations de la pièce avec une seule mesure instantanée de la pièce, soit par deux rotations avec deux mesures simultanées.

Il est bien évident que le logiciel du calculateur peut être adapté pour accepter un plus grand nombre de rotations, par exemple 6 rotations de 60° ou 8 rotations de 45° ou plus, suivant la complexité du contour à vérifier.

## Revendications

1. Procédé de mesure ou de contrôle sans contact des contours géométriques de la section d'une pièce apte à réfléchir au moins partiellement un rayonnement lumineux caractérisé en ce que

a) on dispose la pièce (12) sur un banc de mesure possédant trois degrés de libertés en translation X, Y, Z et un degré de liberté θ en rotation autour de l'axe vertical Y ;

b) on éclaire la pièce ponctuellement au moyen d'au moins une source lumineuse (L, 13) émettant un rayonnement focalisé horizontal parallèle a l'axe Z ;

c) on recueille le rayonnement réfléchi par la pièce au moyen d'au moins un dispositif de détection (27) photoélectrique disposé dans le plan vertical ZY perpendiculairement au rayon réfléchi, ledit dispositif de détection étant constitué par une barette dite barette de mesure constituée de photodiodes Dj distantes entre elles d'un pas constant ;

d) on enregistre au moyen d'un calculateur (35) l'index $i_{dmj}$ de la photodiode Dj ayant reçu l'intensité maximale du rayonnement refléchi par la pièce, ainsi que l'index $i_{xi}$ de positionnement de la pièce selon l'axe X ;

e) on déplace la pièce d'un pas de mesure selon l'axe X et on répète les opérations c) et d) ;

f) on effectue les étapes c) d) et e) autant de fois que la dimension de la pièce selon l'axe X comporte de fois le pas de mesure.

2. Procédé selon la revendication 1, caractérisé en ce que pour mesurer le profil complet d'une pièce on réalise :

g) une rotation θ de 90° de la pièce et on répète les opérations c) à f) jusqu' avoir effectué la rotation complète de la pièce et l'enregistrement desdites mesures selon quatre faces de la pièce.

3. Procédé selon l'une des revendications 1 ou 2 caractérisé en ce que,

h) on restitue au moyen du calculateur (35) muni d'une sortie graphique (38) les courbes de mesure correspondant au profil de la section mesurée.

4. Procédé selon la revendication 3 caractérisé en ce que pour mesurer le volume géométrique d'une pièce (12) :

i) on divise ladite pièce en sections parallèles au plan XZ et l'on effectue les opérations c) à h) autant de fois que la pièce compte de sections, par déplacements successifs d'un pas de mesure en Y,

j) on trace au moyen de la sortie graphique (38) du calculateur (35) le contour ou les contours superposés de chaque section pour reconstituer une vue dans l'espace en 3 dimensions de la géométrie de la pièce.

5. Procédé selon l'une des revendications 1 à 4 caractérisé en ce que préalablement à la mesure on détermine par ombrage au moyen d'un ensemble de photo-détecteurs dit barette d'apprentissage (33) disposée derrière la pièce et face au faisceau incident des index $i_{xl}$ et $i_{xn}$ de positionnement de la pièce selon l'axe X, lesdits index $i_{xl}$ et $i_{xn}$ correspondant respectivement à chaque bord de la pièce, on transmet lesdits index au calculateur afin de déterminer parmi les mesures réalisées par la barette de mesure, celles correspondant à des valeurs réelles du contour de la pièce.

6. Procédé selon l'une quelconque des revendications 1 et 3 à 5 caractérisé en ce qu'on utilise deux sources lumineuses (41, 42 ; 44, 44') disposées de part et d'autre de la pièce et deux barettes de mesures (27) pour effectuer simultanément l'enregistrement du profil de deux faces opposées de la pièce.

7. Dispositif de mise en oeuvre du procédé selon l'une quelconque des revendications 1 à 4 caractérisé en ce qu'il comporte

— au moins une source lumineuse (L, 13) focalisée apte à éclairer la pièce horizontalement,

— un banc support de pièce constitué d'au moins une poutre verticale (3) sur laquelle est apte à coulisser verticalement une console (5) supportant une première table (6) apte à coulisser horizontalement selon l'axe X, ladite première table (6) portant une seconde table (8) coulissant horizontalement en Z, la seconde table portant un plateau (10) porte-pièce circulaire, rotatif autour de l'axe Y,

— au moins un dispositif de détection (27) comportant une barette de photodétecteurs (Dj) disposée dans un plan vertical, orthogonalement au rayon réfléchi par la pièce (12), et comportant une électronique de commande (27')

— un calculateur (35) relié au banc support de pièce pour en commander les déplacements en X, Y, Z, et enregistrer les informations de position dudit banc support et relié au dispositif de détection (27) pour en enregistrer les index $i_{dmj}$ de chacune des photodiodes Dj dudit dispositif.

8. Dispositif selon la revendication 7, caractérisé en ce que le calculateur (35) comporte en sortie une table traçante (38) apte à restituer les courbes de mesure correspondant au profil de chaque section mesurée.

9. Dispositif selon l'une des revendications 7 ou 8, caractérisé en ce que la source lumineuse (13) est un laser à gaz hélium-néon muni d'un polariseur (21).

10. Dispositif selon l'une des revendications 7 ou 8, caractérisé en ce que la source lumineuse (13) est une diode laser munie d'au moins une fibre optique (41) pour la transmission du faisceau lumineux vers la pièce.

11. Dispositif selon la revendication 10 caractérisé en ce que la diode laser est munie d'un bloc séparateur (40) et de deux fibres optiques (41,42) pour la transmission de deux faisceaux lumineux éclairant chacun une face de la pièce, pour l'étude simultanée de deux faces de la pièce.

12. Dispositif selon l'une quelconque des revendications 7 à 11 caractérisé en ce que chaque barette de mesure (27) est constituée de 1728 diodes espacées d'un pas constant.

13. Dispositif selon la revendication 12, caractérisé en ce que la barette de mesure est équipée d'un objectif (31) à rapport de grossissement supérieur ou égal à X25 apte à amplifier l'écart angulaire du rayon réfléchi par la pièce.

14. Dispositif selon l'une quelconque des revendications 11 à 13 caractérisé en ce qu'il comporte deux barettes de mesures (27) disposées de part et d'autre de la pièce pour une mesure simultanée de deux faces opposées de la pièce.

15. Dispositif selon l'une quelconque des revendications 7 à 10 caractérisé en ce qu'il comporte un second ensemble de photodétecteurs, dit barette d'apprentissage (33) disposé derrière la pièce face au faisceau incident, ladite barette d'apprentissage étant reliée au calculateur (35) pour déterminer par ombrage par déplacement de la pièce selon l'axe X entre le faisceau incident et la barette d'apprentissage les index $i_{xl}$ et $i_{xn}$ correspondant à chaque bord de la pièce.

16. Dispositif selon la revendication 15 caractérisé en ce qu'il comporte un bâti (1) comprenant

— une première poutre horizontale 14) parallèle à l'axe Z supportant une seconde poutre horizontale (17) parallèle à la première poutre et réglable parallèlement à l'axe X, seconde poutre sur laquelle est disposée la source lumineuse (13)

— une poutre verticale (15) portant un support de polariseur (22) réglable en hauteur et comportant en outre un support (24) orienté à 45°, également réglable en hauteur, ledit support portant la barette de mesure (27) et comportant des moyens (28) de calage en distance de la barette sur l'axe optique du rayon réfléchi.

— un banc support de pièce (6 à 11)

— un support (32) pour la barette d'apprentissage, ledit support étant disposé à l'extrémité opposée du bâti (1) par rapport à la source lumineuse.

17. Dispositif selon la revendication 16, caractérisé en ce qu'il comporte un moyen d'étalonnage de la surface objet de la pièce, ledit moyen étant constitué d'une bille étalon disposée au centre du plateau porte-pièce (10) et apte à fournir une référence spatiale pour le calage de l'axe optique de réception du rayon réfléchi par la surface objet.

## Patentansprüche

1. Verfahren zum berührungsfreien Messen oder Prüfen von geometrischen Querschnittskonturen eines Teils, das eine Lichtstrahlung zumindest teilweise reflektieren kann, gekennzeichnet durch folgende Verfahrensschritte :

a) man ordnet das Teil (12) auf einer Meßbank an, die drei Freiheitsgrade X, Y und Z der Translation und einen Freiheitsgrad θ der Rotation um die vertikale Achse Y besitzt,

b) man beleuchtet das Teil punktuell mit Hilfe wenigstens einer Lichtquelle (L, 13), die eine zu der Achse Z parallele fokussierte horizontale Strahlung aussendet,

c) man nimmt die von dem Teil reflektierte Strahlung mit Hilfe wenigstens einer photoelektrischen Detektoreinrichtung (27) auf, die in der zu dem reflektierten Strahl senkrechten vertikalen Ebene ZY angeordnet ist und aus einer als Meßleiste bezeichneten Leiste aus mit konstantem Schrittabstand angeordneten Photodioden Dj besteht,

d) man registriert mit Hilfe eines Rechners (35) den Index $i_{dmj}$ derjenigen Photodiode Dj, die die maximale Intensität der von dem Teil reflektierten Strahlung aufgenommen hat, sowie den Index $i_{xl}$ der Positionierung des Teils entlang der Achse X,

e) man verschiebt das Teil um einen Meßschritt entlang der Achse X und wiederholt die Schritte c) und d),

f) man führt die Schritte c), d) und e) soviele Male aus, wie der Meßschritt in der Ausdehnung des Teils in Richtung der Achse X den Meßschritt enthalten ist.

2. Verfahren nach Anspruch 2, dadurch gekennzeichnet, daß man zur Messung des vollständigen Profils eines Teils

g) eine Drehung θ des Teils um 90° ausführt und die Schritte c) bis f) wiederholt, bis man das Teil vollständig gedreht und die Registrierung der genannten Messungen nach vier Seiten des Teils ausgeführt hat.

3. Verfahren nach einem der Ansprüche 1 oder 2, dadurch gekennzeichnet, daß man

h) mit Hilfe des mit einer graphischen Ausgabe (38) ausgestatteten Rechners (35) die dem Profil des gemessenen Querschnitts entsprechenden Meßkurven rekonstruiert.

4. Verfahren nach Anspruch 3, dadurch gekennzeichnet, daß man zur Messung des geometrischen Volumens eines Teils (12)

i) das Teil durch aufeinanderfolgende Verschiebungen um jeweils einen Meßschritt in Richtung Y in zur Ebene XY parallele Abschnitte unterteilt und die Schritte c) bis h) soviele Male ausführt, wie das Teil Abschnitte aufweist, und

j) mit Hilfe der graphischen Ausgabe des Rechners (35) die Kontur oder die überlagerten Konturen jedes Abschnitts zeichnet, um eine dreidimensionale räumliche Ansicht der Geometrie zu gewinnen.

5. Verfahren nach einem der Ansprüche 1 bis 4, dadurch gekennzeichnet, daß man vor der Messung durch Abschatten mit Hilfe einer als Lehrleiste (33) bezeichneten Gruppe von Photodetektoren, die hinter dem Teil und gegenüber dem einfallenden Strahlungsbündel angeordnet ist, die Indizes $i_{xl}$ und $i_{xn}$ der Positionierung des Teils in Richtung der jeweils jedem Rand des Teils entsprechenden Achse X bestimmt, daß man diese Indizes zu dem Rechner überträgt, um unter den von der Meßleiste durchgeführten Messungen diejenigen zu bestimmen, die tatsächlichen Werten der Kontur des Teils entsprechen.

6. Verfahren nach einem der Ansprüche 1 und 3 bis 5, dadurch gekennzeichnet, daß man zwei zu beiden Seiten des Teils angeordnete Lichtquellen (41, 42 ; 44, 44') und zwei Meßleisten (27) verwendet, um die Registrierung des Profils von zwei entgegengesetzten Seitenflächen des Teils gleichzeitig durchzuführen.

7. Vorrichtung zur Durchführung des Verfahrens nach einem der Ansprüche 1 bis 4, gekennzeichnet durch

wenigstens eine fokussierte Lichtquelle (L, 13) zur horizontalen Beleuchtung des Teils,

eine Bank zum Halten des Teils mit wenigstens einer vertikalen Säule (3), an der eine Konsole (5) in vertikaler Richtung gleiten kann, die einen ersten Tisch (6) trägt, der in Richtung der Achse X horizontal gleiten kann, wobei dieser erste Tirch (6) einen zweiten Tisch (8) trägt, der horizontal in Richtung Z gleiten kann, wobei der zweite Tisch eine kreisförmige Platte (10) zum Halten des Teils trägt, die um die Achse Y drehbar ist,

wenigstens eine Detektoreinrichtung (27) mit einer Leiste von Photodetektoren (Dj), die in einer vertikalen Ebene orthogonal zu dem von dem Teil reflektierten Strahl angeordnet ist, und mit einer Steuerelektronik (27'),

und einen Rechner (35), der mit der Bank zum Halten des Teils verbundenen ist, die Verschiebungen der Bank in den Richtungen X, Y und Z zu steuern und die Positionsinformationen der Bank zu registrieren, wobei der Rechner mit der Detektoreinrichtung (27) verbunden, um die Indizes $i_{dmj}$ jeder der Photodioden Dj der Vorrichtung zu registrieren.

8. Vorrichtung nach Anspruch 7, dadurch gekennzeichnet, daß der Rechner (35) ausgangsseitig einen Plotter (38) aufweist zur Rekonstruktion der dem Profil jedes gemessenen Querschnitts entprechenden Meßkurven.

9. Vorrichtung nach einem der Ansprüche 7 oder 8, dadurch gekennzeichnet, daß die Lichtquelle (13) ein Helium-Neon-Gaslaser mit einem Polarisator (21) ist.

10. Vorrichtung nach einem der Ansprüche 7 oder 8, dadurch gekennzeichnet, daß die Lichtquelle (13) eine Laserdiode ist, die mit wenigstens einer optischen Faser (41) zur Übertragung des Lichtstrahlenbündels zu dem Teil ausgestattet ist.

11. Vorrichtung nach Anspruch 10, dadurch gekennzeichnet, daß zur gleichzeitigen Untersuchung zweier Seiten des Teils die Laserdiode mit einem Strahlungsteilerblock (40) ausgestattet ist, sowie mit zwei optischen Fasern (41, 42) zur Übertragung zweier Lichtstrahlenbündel, die jeweils eine Seite des Teils beleuchten.

12. Vorrichtung nach einem der Ansprüche 7 bis 11, dadurch gekennzeichnet, daß jede Meßleiste (27) aus 1728 Dioden besteht, die mit konstantem Schrittabstand angeordnet sind.

13. Vorrichtung nach Anspruch 12, dadurch gekennzeichnet, daß die Meßleiste mit einem Objektiv (31) mit einem Vergrößerungsfaktor von mehr 25 zur Vergrößerung des Winkels des von dem Teil reflektierten Strahls ausgestattet ist.

14. Vorrichtung nach einem der Ansprüche 11 bis 13, dadurch gekennzeichnet, daß zwei Meßleisten (27) vorgesehen sind, die zur gleichzeitigen Messung zweier gegenüberliegender Seitenflächen des Teils zu beiden Seiten des Teils angeordnet sind.

15. Vorrichtung nach einem der Ansprüche 7 bis 10, dadurch gekennzeichnet, daß sie eine als Lehrleiste (23) bezeichnete zweite Gruppe von Photodetektoren aufweist, die hinter dem Teil und gegenüber dem einfallenden Strahlungsbündel angeordnet ist, wobei die Lehrleiste mit dem Rechner (35) verbunden ist, um durch Abschatten durch Verschieben des Teils in Richtung X zwischen dem einfallenden Strahlungsbündel und der Lehrleiste die den einzelnen Rändern des Teils entsprechenden Indizes $i_{xl}$ und $i_{xn}$ zu bestimmen.

16. Vorrichtung nach Anspruch 15, dadurch gekennzeichnet, daß sie ein Gestell (1) aufweist mit

einem ersten zur Achse Z parallelen horizontalen Träger (14), der einen zweiten horizontalen Träger (17) trägt, der parallel zu dem ersten Träger verläuft und parallel zur Achse X verstellbar ist, wobei auf dem zweiten Träger die Lichtquelle (13) angeordnet ist,

eine vertikale Säule (15), die einen verstellbaren Polarisatorhalter (22) trägt und weiterhin einen um 45° geneigten, ebenfalls höhenverstellbaren Halter (24) aufweist, der die Meßleiste (27) trägt und Mittel (28) zur Einstellung der Entfernung der Leiste auf der optischen Achse des reflektierten Strahls aufweist,

eine Bank (6 bis 11) zum Halten des Teils,

eine Halterung (32) für die Lehrleiste, wobei diese Halterung an dem in bezug auf die Lichtquelle entgegengesetzten Ende des Gestells (1) angeordnet ist.

17. Vorrichtung nach Anspruch 16, dadurch gekennzeichnet, daß sie eine Einrichtung zum Eichen der Objektfläche des Teils aufweist, die aus einer im Zentrum der Platte (10) zum Halten des Teils angeordneten Eichkugel besteht und eine räumliche Referenz für die Einstellung der optischen Empfangsachse des von der Objektfläche reflektierten Strahls liefern kann.

## Claims

1. Method of measuring or of checking without contact the geometrical contours of the cross-section of a part at least partially able to reflect luminous radiation, characterised in that

a) the part (12) is arranged on a measuring bench possessing three translational degrees of freedom X, Y, Z and one rotational degree of freedom $\theta$ about the vertical Y axis ;

b) the part is illuminated pointwise by means of at least one light source (L, 13) emitting horizontal focused radiation parallel to the Z axis ;

c) the radiation reflected by the part is gathered by means of at least one photoelectric detection device (27) arranged in the vertical ZY plane perpendicular to the reflected ray, the said detection device consisting of a bar, termed the measuring bar, consisting of photodiodes Dj distanced from one another by a constant step ;

d) by means of a computer (35) the index $i_{dmj}$ of the photodiode Dj having received the maximum intensity of the radiation reflected by the part, as well as the positioning index $i_{xl}$ of the part along the X axis, are recorded ;

e) the part is displaced by one measurement step along the X axis and the operations c) and d) are repeated ;

f) steps c), d) and e) are performed as many times as the dimension of the part along the X axis includes the measurement step.

2. Method according to Claim 1, characterised in that in order to measure the complete profile of a part there is carried out :

g) a 90° rotation $\theta$ of the part and the operations c) to f) are repeated until the complete rotation of the part and the recording of the said measurements over four faces of the part have been performed.

3. Method according to one of Claims 1 or 2, characterised in that

h) by means of the computer (35) provided with a graphical output (38), the measurement curves corresponding to the profile of the measured cross-section are restored.

4. Method according to Claim 3, characterised in that in order to measure the geometrical volume of a part (12) :

i) the said part is divided into cross-sections parallel to the XZ plane and the operations c) to h) are performed as many times as the part has cross-sections, by successive displacements by a measurement step in Y,

j) by means of the graphical output (38) of the computer (35), the contour or superimposed contours of each crosssection are plotted in order to reconstruct a 3-dimensional spatial view of the geometry of the part.

5. Method according to one of Claims 1 to 4, characterised in that prior to the measurement there are determined by shadowgraph by means of a collection of photodetectors, termed the training bar (33), arranged behind the part and facing the incident beam, positioning indices $i_{xl}$ and $i_{xn}$ of the part along the X axis, the said indices $i_{xl}$ and $i_{xn}$ corresponding respectively to each edge of the part, the said indices are transmitted to the computer so as to determine, among the mesaurements carried out by the measuring bar, those corresponding to real values of the contour of the part.

6. Method according to any one of Claims 1 and 3 to 5, characterised in that two light sources (41, 42; 44, 44′) arranged on either side of the part, and two measuring bars (27), are used to simultaneously perform the recording of the profile of two opposite faces of the part.

7. Device for implementing the method according to any one of Claims 1 to 4, characterised in that it comprises

— at least one focused light source (L, 13) able to illuminate the part horizontally,

— a part support bench consisting of at least one vertical girder (3) on which is able to slide vertically a bracket (5) supporting a first table (6) able to slide horizontally along the X axis, the said first table (6) carrying a second table (8) sliding horizontally in Z, the second table carrying a circular part-carrying platen (10) which can rotate about the Y axis,

— at least one detection device (27) comprising a bar of photodetectors (Dj) which is arranged in a vertical plane, orthogonal to the ray reflected by the part (12), and comprising control electronics (27′)

— a computer (35) connected to the part support bench in order to control the displacements in X, Y, Z thereof, and to record the position information of the said support bench and connected to the detection device (27) in order to record therewith the indices $i_{dmj}$ of each of the photodiodes Dj of the said device.

8. Device according to Claim 7, characterised in that the computer (35) comprises as output a plotter (38) able to restore the measurement curves corresponding to the profile of each measured cross-section.

9. Device according to one of Claims 7 or 8, characterised in that the light source (13) is a helium-neon gas laser provided with a polariser (21).

10. Device according to one of Claims 7 or 8, characterised in that the light source (13) is a laser diode provided with at least one optical fibre (41) for the transmission of the light beam to the part.

11. Device according to Claim 10, characterised in that the laser diode is provided with a splitting block (40) and with two optical fibres (41,42) for the transmission of two light beams each one illuminating one face of the part, for simultaneous study of two faces of the part.

12. Device according to any one of Claims 7 to 11, characterised in that each measuring bar (27) consists of 1728 diodes separated by a constant step.

13. Device according to Claim 12, characterised in that the measuring bar is equipped with an objective (31) with magnification factor greater than or equal to X25 able to magnify the angular deviation of the ray reflected by the part.

14. Device according to any one of Claims 11 to 13, characterised in that it comprises two measuring bars (27) arranged on either side of the part for a simultaneous measurement of two opposite faces of the part.

15. Device according to any one of Claims 7 to 10, characterised in that it comprises a second collection of photodetectors, termed the training bar (33), arranged behind the part facing the incident beam, the said training bar being connected to the computer (35) in order to determine by shadowgraph the indices $i_{xl}$ and $i_{xn}$ corresponding to each edge of the part by displacing the part along the X axis between the incident beam and the training bar.

16. Device according to Claim 15, characterised in that it comprises a chassis (1) comprising

— a first horizontal girder (14) parallel to the Z axis and supporting a second horizontal girder (17) parallel to the first girder and which can be adjusted parallel to the X axis, on which second girder is arranged the light source (13)

— a vertical girder (15) carrying a polariser support (22) which is height-adjustable and further comprising a support (24) oriented at 45°, likewise height-adjustable, the said support carrying the measuring bar (27) and comprising means (28) for locking the distance from the bar to the optical axis of the reflected ray.

— a part support bench (6 to 11)

— a support (32) for the training bar, the said support being arranged at the opposite end of the chassis (1) relative to the light source.

17. Device according to Claim 16, characterised in that it comprised a means of calibrating the object surface of the part, the said means consisting of a standard bead arranged at the centre of the part-carrying platen (10) and able to furnish a spatial reference for locking the optical axis of reception of the ray reflected by the object surface.

FIG:1

FIG:2

FIG: 3a

FIG: 3b

FIG: 3

FIG:4

FIG: 5

FIG:6

FIG:6a

EP 0 320 326 B1

FIG: 7

FIG: 8